# EUROPEAN PATENT SPECIFICATION

(11) **EP 3 439 239 B1**
(45) Date of publication and mention of the grant of the patent: **05.08.2020**
(21) Application number: 17892057.5
(22) Date of filing: 13.07.2017
(51) Int. Cl.: H04L 12/24, H04L 29/08

(54) **DATA TRANSMISSION METHOD AND SYSTEM BASED ON PEER-TO-PEER NETWORK**
DATENÜBERTRAGUNGSVERFAHREN UND -SYSTEM IM PEER-TO-PEER-NETZWERK
PROCÉDÉ ET SYSTÈME DE TRANSMISSION DE DONNÉES BASÉS SUR UN RÉSEAU P2P

(30) Priority: 19.06.2017 CN 201710465546
(43) Date of publication of application: 06.02.2019
(73) Proprietor: Wangsu Science & Technology Co., Ltd., Shanghai 200030 (CN)
(72) Inventor: CHEN, Hong, Shanghai 200030 (CN); LV, Shibiao, Shanghai 200030 (CN)
(74) Representative: Hanna Moore + Curley
(86) International application number: PCT/CN2017/092775
(87) International publication number: WO 2018/232797

(56) References cited:
- WO-A2-2009/036461
- CN-A- 101 068 186
- CN-A- 101 247 193
- CN-A- 105 392 068
- SUSU XIE ET AL: "A measurement of a large-scale peer-to-peer live video streaming system", PACKET VIDEO 2007, IEEE, PI, 1 November 2007 (2007-11-01), pages 153-162, XP031170610, DOI: 10.1109/PACKET.2007.4397037 ISBN: 978-1-4244-0980-8
- LINCHEN YU ET AL: "Self-adaptive Schedule Mechanism for Peer-to-peer Multi-rate Live Streaming System", HIGH PERFORMANCE COMPUTING AND COMMUNICATION&2012 IEEE 9TH INTERNATIONAL CONFERENCE ON EMBEDDED SOFTWARE AND SYSTEMS (HPCC-ICESS), 2012 IEEE 14TH INTERNATIONAL CONFERENCE ON, IEEE, 25 June 2012 (2012-06-25), pages 666-672, XP032255329, DOI: 10.1109/HPCC.2012.95 ISBN: 978-1-4673-2164-8
- YONG LIU ET AL: "A survey on peer-to-peer video streaming systems", PEER-TO-PEER NETWORKING AND APPLICATIONS, SPRINGER, US, vol. 1, no. 1, 10 January 2008 (2008-01-10), pages 18-28, XP002515848, ISSN: 1936-6442, DOI: 10.1007/S12083-007-0006-Y

## Description

### FIELD OF THE DISCLOSURE

The present disclosure generally relates to the network data transmission technology and, more particularly, relates to a method and a system for peer-to-peer network data transmission.

### BACKGROUND

As the Internet technology advances, the network data transmission technology is also constantly improving.

In the traditional network data transmission, a client-end can use the network connection between the client-end and a server to download file data from the server to a local location. In this process, because the file data has a certain size, it takes certain amount of downloading time.

From the client-end perspective, it is possible, because the bandwidth limitation of network, packet loss rate, and other unpredictable irregularities may cause the file transmission to be slow or abnormal, the client-end may be unable to obtain requested data normally or quickly. Especially, when the requested file data has a large size or real-timeliness, such as, streaming media files, the file data transmission model under such client/server architecture often encounters numerous issues.

From the server perspective, the number of concurrent connections may be limited. If each client-end is connected extensively long, other client's requests for connection may likely be rejected or placed in queues.

Thus, the traditional network data transmission technology often has many problems, and is more and more unlikely to satisfy various business demands, such as on-demand service and live streaming service that require dependable real-time file transfer. Moreover, client-end resources are not effectively utilized either.

In recent years, the emerging P2P (peer-to-peer network) technology can take advantage of individual nodes on the Internet for peer-to-peer computing, fully utilize idle resources on the Internet, and allow two client-ends to directly exchange information.

At present, many network data transmission technical solutions are based on p2p. Primarily, individual client-end nodes in the peer-to-peer network may exchange the data the client-ends own by exchanging bitmap with each other. However, requiring each node to exchange bitmap information with each other is not only difficult to implement, but also affects the transmission speed and performance, thereby ineffective to achieve low latency.

The document SUSU XIE et al: "A measurement of a large-scale peer-to-peer live video streaming system" discloses fundamental design principles and examine the system dynamics. This document simply discloses that A parent node will always accept requests and it will simply push out all blocks of a sub-stream in need to the requesting node.

The document LINCHEN YU et al: "Self-adaptive Schedule Mechanism for Peer-to-peer Multi-rate Live Streaming System") discloses that one media source is separated into many sequential segments at source server. These media segments are firstly delivered to several super nodes, which could be servers with high performance deployed at different domains by the service provider. Media data are delivered to the peers via an overlay network by adopting the hierarchy multi-tree network or flat mesh network techniques.

The document YONG LIU et al: "A survey on peer-to-peer video streaming systems" discloses that peers establish and terminate peering relationships dynamically. At any given time, a peer maintains peering relationship with multiple neighboring peers. A peer may download/upload video from/to multiple neighbors simultaneously.

The document WO 2009/036461 A2 mainly discloses a system for streamed-media distribution which comprises a first media stream received at a streaming server, at least a first and a second client in communication with the streaming server, first and second sub-stream packet streams created from the first media stream at the streaming server, and received by first and second clients, respectively, a first peer-relay list, transmitted from the streaming server and received by the first client.

### BRIEF SUMMARY OF THE DISCLOSURE

To solve issues in the existing technology, the present disclosure provides a peer-to-peer network based data transmission technology. The technical solution includes the followings.

The present invention is defined in the appended independent claims 1 and 7. Advantageous features are set out in the appended dependent claims. The technical solution not only reduces the workload at the data source from which the requesting node downloads the data slices, but also fully utilizes the data sharing with the other requesting nodes. Thus, the timeliness of the data transmission is improved, the latency is reduced, and the live streaming service requirement is better satisfied.

Further, the requesting node and the other requesting nodes in the data sharing relationship push the self-downloaded data slices to each other, and respectively receive the data slices pushed by the other party.

Further, the other requesting node in the data sharing relationship pushes the self-downloaded data slices to the requesting node, and the requesting node receives the data slices pushed by the other requesting node.

Further, the requested data includes a streaming media file.

Further, the streaming media file includes a source file of live streaming.

Further, the requesting node keeps or terminates the data sharing relationship with the other requesting nodes.

The present disclosure provides a peer-to-peer network based data transmission system, comprising:
a plurality of requesting nodes; and
a data server connecting to each requesting node, where:
   the data server slices requested data into data slices, and establishes at least two transmission sub-streams, where the data slices are transmitted through corresponding transmission sub-streams;
   the requesting node selects a transmission sub-stream and establishes data sharing relationship with other requesting nodes, where the other requesting nodes select transmission sub-streams different from the transmission sub-stream selected by the requesting node; and
   the requesting node downloads corresponding data slices through the transmission sub-stream, and based on the data sharing relationship, receives data slices downloaded through the transmission sub-streams self-selected by the other requesting nodes.

Further, slicing, by the data server, the requested data into data slices includes slicing the requested data into data slices according to pre-determined processing rules.

Further, the data server creates a sequence number for the data slice, and distributes the data slice to each transmission sub-stream based on the sequence number of the data slice.

Further, selecting, by the requesting node, a transmission sub-stream includes selecting a transmission sub-stream based on the selection status of each transmission sub-stream or a randomly generated number.

Further, the system further including a distribution server, where the requesting node's establishing data sharing relationship with other requesting nodes includes:
sending, by the requesting node, distribution request information to the distribution server, wherein the distribution request information includes the identification information of the requesting node and the information of the selected transmission sub-stream;
selecting and responding, by the distribution server, information about other nearby requesting nodes based on the distribution request information; and
establishing, by the requesting node, the data sharing relationship with other requesting nodes according to the response from the distribution server, respectively.

Further, the requesting node and the other requesting nodes in the data sharing relationship push the self-downloaded data slices to each other, and respectively receive the data slices pushed by the other party.

Further, the other requesting node in the data sharing relationship pushes the self-downloaded data slices to the requesting node, and the requesting node receives the data slices pushed by the other requesting node.

Further, the requested data includes a streaming media file.

Further, the requested data on the data server includes a streaming media file obtained from a live streaming platform.

Further, the requesting node keeps or terminates the data sharing relationship with the other requesting nodes.

Further, the system includes a plurality of data servers.

The technical solution according to the present disclosure first slices the requested data into the data slices and respectively distributes the data slices to the corresponding transmission sub-streams such that the data slices are split to each transmission sub-stream. In this way, the data transmitted through each transmission sub-stream is only a fraction of the requested data, and the amount of the transmitted data through each transmission sub-stream is smaller than the requested data.

The requesting node selects the transmission sub-stream, downloads the corresponding data slices through the transmission sub-stream, obtains the corresponding data downloaded by the other requesting node through the other transmission sub-stream based on the data sharing relationship with the other requesting node, and thus obtains the requested data. The technical solution not only reduces the workload at the data source from which the requesting node downloads the data slices, but also fully utilizes the data sharing with the other requesting nodes. Thus, the timeliness of the data transmission is improved, the latency is reduced, and the live streaming service requirement is better satisfied.

Further, based on the timeliness and the integrity of the received data slices, the requesting node decides whether to keep or terminate certain data sharing relationship the requesting node creates. Thus, the data sharing relationship is evolved and updated.

### BRIEF DESCRIPTION OF THE DRAWINGS

To more clearly illustrate the technical solution in the present disclosure, the accompanying drawings need to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a flow chart of an exemplary peer-to-peer network data transmission method according to the disclosed embodiments;
FIG. 2 illustrates a schematic diagram of an exemplary process of generating and distributing data slices according to the disclosed embodiments;
FIG. 3 illustrates a flow chart of an exemplary method for the requesting node in FIG. 1 to establish a data sharing relationship with other nodes according to the disclosed embodiments;
FIG. 4 illustrates a schematic diagram of an exemplary data exchange between the requesting node and the distribution server according to the disclosed embodiments;
FIG. 5 illustrates a schematic diagram of an exemplary peer-to-peer network data transmission system architecture according to the disclosed embodiments; and
FIG. 6 illustrates a schematic diagram of another exemplary peer-to-peer network data transmission system architecture according to the disclosed embodiments.

### DETAILED DESCRIPTION

Reference will now be made in detail to exemplary embodiments of the disclosure, which are illustrated in the accompanying drawings. Those skilled in the art may readily understand other advantages and effects of the present disclosure as described in the specification. The present disclosure may be embodied or practiced in the ways different from the disclosed embodiments. The details described in the specification may be modified or varied for different perspectives and applications without departing from the spirit of the present disclosure. Under non-conflicting circumstances, the features in the present disclosure may be combined with each other.

It should be noted that the illustrations provided in the disclosed embodiments are intended to provide only the basic concept of the present disclosure. Only the components related to the present disclosure are shown in the schematic drawings rather than the actual number, shape or size of the components in the real life applications. The actual implementation of the various components may be arbitrarily changed in type, quantity and proportion, and the component layout may also be more sophisticated.

Embodiments of the present disclosure are described as follows with references to the accompanying drawings.

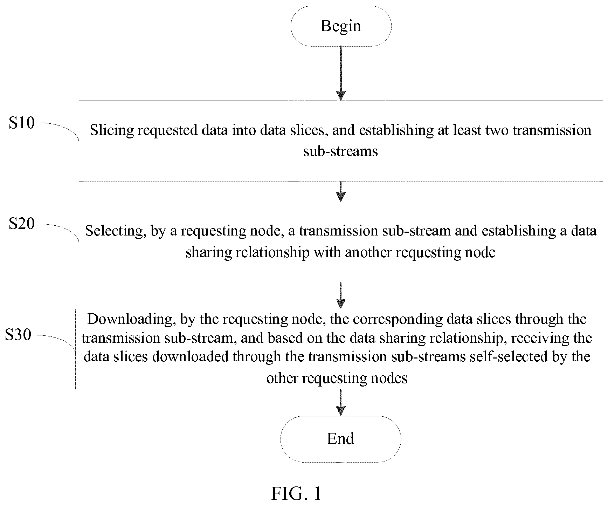

FIG. 1 illustrates a flow chart of an exemplary peer-to-peer network data transmission method according to the present disclosure. As shown in FIG. 1, the peer-to-peer network data transmission method provided by the embodiment of the present disclosure may include the following steps.

Step S10: slicing requested data into data slices, and establishing at least two transmission sub-streams, wherein the data slices are transmitted through the corresponding transmission sub-streams.

Specifically, the requested data may include various types of data files and streaming media files, etc.

Slicing the requested data into slices may include slicing the requested data into slices according to pre-defined processing rules, wherein the pre-defined processing rules may include setting a length for an individual data slice.

For the streaming media files, the pre-defined processing rules may include slicing the streaming media file into data slices in a pre-defined length of time to obtain the data slices having equal length in time. Thus, each data slice may have a substantially uniform size.

In certain other embodiments, other pre-defined processing rules may be used to slice the requested data into data slices. For example, the data slice length may vary according to the size of data. For streaming media files, the data slice length may be determined such that each data slice includes a key frame, and the obtained data slices may have variable length. No limitation is imposed by the present disclosure.

The transmission sub-streams may be used to transfer the data slices separately. In one embodiment, each requesting node may exchange data through peer-to-peer networking. Thus, at least two transmission sub-streams may be needed.

In the process of data transmission, each data slice may be transmitted in an assigned transmission sub-stream. The generation and distribution of data slices are described below in detail with reference to the accompanying drawings.

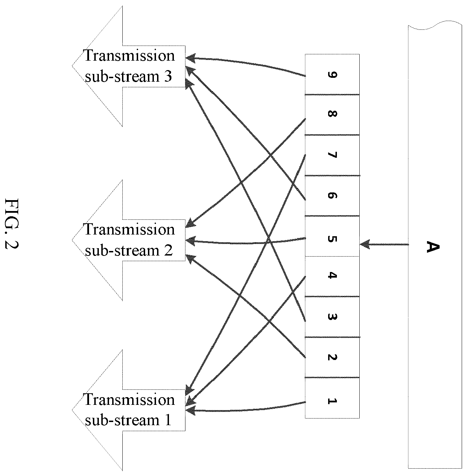

FIG. 2 illustrates a schematic diagram of an exemplary process of generating and distributing data slices according to the present disclosure. As shown in FIG. 2, a streaming media file A may be sliced into equal-length slices according to a time unit, and each slice may be assigned with a sequence number F (the data slices as shown in the drawing have the sequence numbers 1, 2, 3, 4, 5, 6, 7, 8, and 9). *N* number of transmission sub-streams may be established. As shown in FIG. 2, *N* = 3, that is, the transmission sub-streams may be assigned with sequence numbers 1, 2, and 3.

In one embodiment, the data slice may be distributed to a corresponding transmission sub-stream based on the sequence number *F* of the data slice and the transmission sub-stream number *N*. Specifically, the data slice may be assigned to the transmission sub-stream by a modulo operation method. That is, the data slice having a sequence number *F* may be assigned to the transmission sub-stream *F%N.* As shown in FIG. 2, the data slices 1, 4, and 7 may be assigned to the transmission sub-stream 1, the data slices 2, 5, and 8 may be assigned to the transmission sub-stream 2, and the data slices 3, 6, and 9 may be assigned to the transmission sub-stream 3.

As shown in Fig. 2, the streaming media file *A* may be a streaming media file for on-demand service or a streaming media file for live streaming service.

For the on-demand service, the streaming media file may be static, and may not change. Thus, the streaming media file may first be sliced and assigned with sequence numbers. Then, the number of slices may determine the number of the transmission sub-streams. Finally, the data slices may be distributed to the corresponding transmission sub-streams. The number of transmission sub-streams may be a pre-determined fixed number. In this way, the data slices may be generated and at the same time assigned to the corresponding transmission sub-stream. No limitation is imposed by the present disclosure.

For the live streaming service, the streaming media file *A* may be dynamic, and may be generated continuously during the live streaming. Thus, the data slices may be sequentially distributed to the transmission sub-streams in the order in which the data slices are generated. Specifically, because the streaming media file is continuously generated, the slicing of the data slices and the distribution to the transmission sub-streams may proceed as the streaming media file is being generated. In other words, during the live streaming, when the streaming media file is generated to reach a pre-determined slice unit length, the corresponding section of the data may be sliced into a data slice, and may be distributed to a transmission sub-stream. In this way, the live streaming data transmission may be ensured to be in real-time.

It should be noted that, as shown in Fig. 2, slicing and distributing the data slices to the transmission sub-streams may include assigning a sequence number to the current data slice, performing modulo operation (the data slice sequence number mod the number of transmission sub-streams) to find the remainder as a sequence number of the transmission sub-stream, and distributing the data slice to the corresponding transmission sub-stream, such that the data slices may be evenly distributed to each transmission sub-stream, and the live streaming service requirement may be better satisfied. In certain other embodiments, other methods may be used to distribute the data slices as long as the data slices are distributed to every transmission sub-stream, and the data slices in each transmission sub-stream are different.

Step S20: selecting, by a requesting node, a transmission sub-stream and establishing a data sharing relationship with another requesting node.

The requesting node may be a network node that sends a data request to a data source. Selecting a transmission sub-stream at the requesting node may include selecting a transmission sub-stream based on a selection status of the transmission sub-stream by the currently requested data. For example, the transmission sub-stream with a minimum number of established selections may be selected such that each transmission sub-stream may be selected by a balanced number of the requesting nodes.

In certain other embodiments, a random number may be generated to select a corresponding transmission sub-stream. As shown in FIG. 2, the streaming media file A may include a transmission sub-stream 1, a transmission sub-stream 2, and a transmission sub-stream 3. The requesting node may generate a random number '2' by a random function or other suitable method, and may select the transmission sub-stream 2.

Network based data transmission may encounter substantial concurrent traffic, especially when a large number of simultaneously active users go online and request the same data. That is, the number of requesting nodes is large, and each transmission sub-stream may be selected by a certain number of the users. In this case, using a randomly generated number to select the transmission sub-stream may be simple and fast as compared to other suitable methods, and the low latency requirement for the live streaming service may be better satisfied.

In one embodiment, the requesting node and certain other requesting nodes may request the same data, and may establish mutual connections through the network. The certain other requesting nodes may select the transmission sub-streams different from the transmission sub-stream selected by the requesting node.

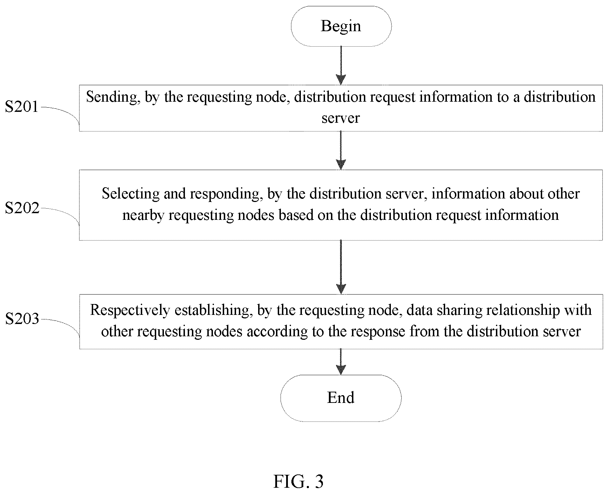

FIG. 3 illustrates a flow chart of an exemplary method for the requesting node in FIG. 1 to establish a data sharing relationship with other nodes according to the present disclosure. As shown in FIG. 3, at the requesting node, establishing data sharing relationship with other requesting nodes may include the following steps.

Step S201: sending, by the requesting node, distribution request information to a distribution server.

Step S202: selecting and responding, by the distribution server, information about other nearby requesting nodes based on the distribution request information.

Step S203: respectively establishing, by the requesting node, data sharing relationship with other requesting nodes according to the response from the distribution server.

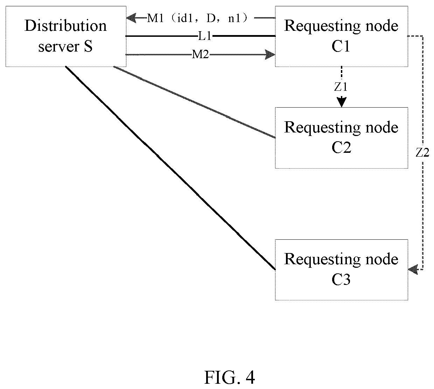

For clearer description for the steps S201 through S203, referring to FIG. 4. FIG. 4 illustrates a schematic diagram of an exemplary data exchange between the requesting node and the distribution server according to the present disclosure.

As shown in FIG. 4, the requesting node *C1* may be connected to the distribution server *S* through the connection *L1*, and may send distribution request information *M1* to the distribution server *S* through the connection *L1.* The distribution request information *M1* may include identification information *id1* of the requesting node *C1* and the selected transmission sub-stream information.

The identification information may be used to identify the requesting node *C1* such that other requesting nodes may determine the requesting node *C1* through the identification information. The identification information may include attributes inherent to the requesting node *C1,* e.g., the IP address and port number of the requesting node *C1.* The identification information may be created in other method, e.g., an identity registered at a registration server dedicated for this purpose. No limitation is imposed by the present disclosure. The transmission sub-stream information may include requested data information *D* and the transmission sub-stream sequence number *n1.*

The distribution server *S* may receive the distribution request information *M1* through the connection *L1,* extract the identification information *id1,* the requested data information *D,* and the transmission sub-stream sequence number *n1* from the distribution request information *M1,* select other requesting nodes *C2* and *C3* near the requesting node *C1* through looking up local records, and return the other requesting node information *M2* to the requesting node *C1.* The other requesting node information *M2* may include the identification information about each of the other requesting nodes. The local records may include the identification information about each requesting node, the requested data information, and the transmission sub-stream information. After extracting the information from the distribution request information *M1,* the distribution server *S* may store the distribution request information *M1* in the local records.

The other requesting nodes may include the requested data information *D,* and may select a transmission sub-stream other than the transmission sub-stream *n1.* For example, the transmission sub-streams set forth based on the requested data may include *n1, n2,* and *n3.* The requesting node *C1* may select the transmission sub-stream *n1.* Then, when making selection, the other requesting nodes may select the transmission sub-stream *n2* or *n3.*

When selecting the other neighboring requesting nodes, the distribution server *S* may obtain the information about all the requesting nodes that share the same requested data and select different transmission sub-streams in the local records, and may select the neighboring requesting nodes that are physically close to the requesting node. Alternatively, the distribution server *S* may select the other requesting nodes that belong to the same service provider as the requesting node *C1.* In one embodiment, the distribution server *S* may select the neighboring requesting nodes according to the specific requirement by considering the physical location, the service provider, and the network status, etc. No limitation is imposed by the present disclosure.

The requesting node *C1* may receive the other requesting node information *M2* returned by the distribution server *S*, extract the identification information for the other requesting nodes *C2* and *C3,* and establish data sharing relationship *Z1* and *Z2* with the other requesting nodes *C2* and *C3*, respectively.

The data sharing relationship may include bidirectional sharing relationship and unidirectional sharing relationship.

In the bidirectional sharing relationship, both requesting nodes may push the self-downloaded data slices to the other party, and may receive the data slices pushed by the other party.

As shown in FIG. 4, the requesting node *C1* may establish a data sharing relationship *Z1* with the requesting node *C2.* When the data sharing relationship is the bidirectional sharing, after the requesting node *C1* downloads the data slice through the selected transmission sub-stream *n1,* the requesting node *C1* may push the data slice to the requesting node *C2*. Similarly, after the requesting node *C2* downloads the data slice through the selected transmission sub-stream *n2*, the requesting node *C2* may push the data slice to the requesting node *C1* through network.

After the data slice is pushed out, the requesting nodes *C1* and *C2* may receive the data slice pushed by the opposite party respectively through the data sharing relationship *Z1*. In this way, the requesting node *C1* and the other requesting node *C2* may form a peer-to-peer network, and may share data across the peer-to-peer network such that the requesting node *C1* may obtain the data slice through the unselected transmission sub-stream from the other requesting node *C2*. Similarly, the requesting nodes *C1* and *C3* may share the data slices through the data sharing relationship *Z2*.

In the unidirectional sharing relationship, the requesting node that creates the data sharing relationship may have the data sharing relationship with the other requesting node similar to subscription relationship. That is, the requesting node *C1* may subscribe to the requesting nodes *C2* and *C3.* Then, after the subscribed requesting nodes *C2* and *C3* download data slices through the self-selected transmission sub-streams *n2* and *n3*, respectively, the subscribed requesting nodes *C2* and *C3* may push the data slices to the subscribing requesting node *C1.* The subscribing requesting node *C1* may receive the data slices pushed by the subscribed requesting nodes *C2* and *C3*. However, the subscribing requesting node *C1* may not be required to push any data slice to the subscribed requesting nodes *C2* and *C3.*

In either the bidirectional sharing relationship or the unidirectional relationship, the requesting node that creates the data sharing relationship may terminate the data sharing relationship.

As previously described, the network data transmission may encounter substantial concurrent traffic. Numerous requesting nodes may request the same data. Then, the number of requesting nodes that select the same transmission sub-stream may naturally be large. Although screening conditions may be set forth to optimize the selection, the number of requesting nodes that select the same transmission sub-stream may be not be 1. Then, the requesting node that proactively creates data sharing relationship may need to select a requesting node, that is, make a requesting node selection based on the status of the data received by each other requesting node that selects the same transmission sub-stream (e.g., transmission sub-stream *n2*).

Specifically, the requesting node may compare the timeliness and the integrity, etc. among the data slices pushed by the other requesting nodes that select the same transmission sub-stream, keep the data sharing relationship with certain other requesting nodes that provide good quality data slices, and terminate the data sharing relationship with certain other requesting nodes that provide poor quality data slices. Thus, the data sharing relationship may be evolved and updated.

Therefore, subject to the steps S10 and S20, the requesting node may select a transmission sub-stream, and may establish data sharing relationship with the other requesting nodes that select different transmission sub-streams.

Step S30: downloading, by the requesting node, the corresponding data slices through the transmission sub-stream, and based on the data sharing relationship, receiving the data slices downloaded through the transmission sub-streams self-selected by the other requesting nodes.

In this way, the requesting node may obtain the complete requested data through the self downloading and the data sharing with the other requesting nodes.

In the embodiments of the present disclosure, only a single requesting node may be illustrated as an entry point. Both the entry requesting node and the other requesting nodes may be requesting nodes of the network. These requesting nodes may use the same method for the data transmission. In other words, regardless of whether the requesting node is the entry requesting node *C1,* or the other requesting node *C2* or *C3,* the same method may be used for downloading and sharing data.

The data transmission method in the peer-to-peer network according to the present disclosure may first slice the requested data into data slices and distribute the data slices to the corresponding transmission sub-streams such that the data slices may be split to each transmission sub-stream. In this way, the data transmitted through each transmission sub-stream may only be a fraction of the requested data, and the amount of the transmitted data through each transmission sub-stream may be less than the requested data.

The requesting node may select the transmission sub-stream, download the corresponding data slices through the transmission sub-stream, obtain the corresponding data downloaded by the other requesting nodes through the other transmission sub-streams based on the data sharing relationship with the other requesting nodes, and obtain the corresponding data slices downloaded from other transmission sub-streams by other requesting nodes and thus obtain the requested data. The method may not only reduce the workload at the data source from which the requesting nodes download the data slices, but also fully utilize the data sharing with the other requesting nodes. Thus, the timeliness of the data transmission may be improved, the latency may be reduced, and the live streaming service requirement may be better satisfied.

Further, based on the timeliness and the integrity of the received data slices, the requesting node may decide whether to keep or terminate certain data sharing relationship the requesting node creates. Thus, the data sharing relationship may be evolved and updated.

In addition, based on the same idea, the present disclosure also provides a peer-to-peer network data transmission system.

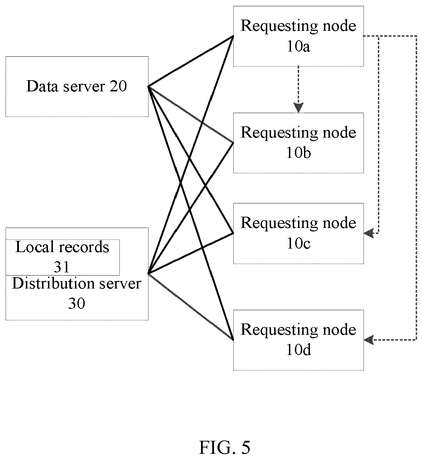

FIG. 5 illustrates a schematic diagram of an exemplary peer-to-peer network data transmission system architecture according to the present disclosure. As shown in FIG. 5, the data transmission system 1 may include a plurality of requesting nodes 10 (illustrated in the drawing as 10a, 10b, 10c, and 10d), and a data server 20. The plurality of the requesting nodes 10 may be connected to the data server 20, respectively.

Specifically, the data server 20 may store various file data for the requesting nodes on the network to download. Based on different service scenarios, the various file data may include static files and dynamic files. For example, for the general data access or on-demand streaming service, the data server 20 may primarily store static files. For the live streaming service, the data server 20 may primarily store dynamic files. Because the requirement for the live streaming service is more stringent than the requirement for the other services, the embodiments provided by the present disclosure may be described in detail with respect to the live streaming service.

For the live streaming service, the data server 20 may be a data source, e.g., a host server or a live streaming platform server, or an intermediate server that obtains and processes the streaming media file from the host server or the live streaming platform server.

When a user selects a live streaming program, the requesting node may request downloading the streaming media file corresponding to the program from the data server 20.

The data server 20 may slice the streaming media file into data slices, and establish at least two transmission sub-streams for the data slices. Each data slice may be transmitted through one of the transmission sub-streams. The data server 20 may proactively slice the streaming media file into data slices, that is, always slice the streaming media file regardless of the existence of user requests. Slicing the streaming media file into data slices may also be driven by a user request, that is, when receiving a user request, the data server 20 may slice the corresponding streaming media file into data slices. The data server 20 may store a large number of streaming media files simultaneously, i.e., the number of the concurrent live streaming programs is large. Some programs may have a large audience while some other programs may have no audience. Slicing the streaming media files into data slices in response to user requests may substantially save the resource of the data server 20.

At the data server 20, slicing the requested data into data slices may include slicing the requested data according to pre-determined processing rules. The pre-determined rules may include a length of a single data slice.

In one embodiment, the pre-determined processing rules may include slicing streaming media files into data slice according to a preset time length to obtain data slices with an equal time length such that each data slice may have a substantially average time length.

In certain other embodiments, other pre-determined processing rules may be used to slice streaming media files into data slices. For example, the size of data may be used as slicing unit. Alternatively, for streaming media files, each data slice may include a key frame, and the data slices may have variable time lengths other than the average time length. No limitation is imposed by the present disclosure.

The transmission sub-streams may be used to transmit each data slice separately. In one embodiment, each requesting node may exchange data based on the peer-to-peer network, and may include at least two transmission sub-streams.

In the data transmission process, each data slice may be transmitted through the assigned transmission sub-stream. The specific details of the process may be referred to FIG. 2 and the corresponding description, and are not repeated.

Based on the user selected live streaming program, the requesting nodes 10 (10a, 10b, 10c, and 10d as shown in FIG. 5) may download the corresponding streaming media file from the data server 20. For illustrative purposes, the requesting node 10a may be used as an entry point.

The requesting node 10a may select a transmission sub-stream and establish data sharing relationship with other requesting nodes.

Specifically, at the requesting node 10a, selecting a transmission sub-stream may include selecting a transmission sub-stream based on the selection status of each transmission sub-stream of the currently requested data. For example, the transmission sub-stream that has been less selected may be selected to balance the number of requesting nodes selecting each transmission sub-stream. The selection status of the current queries may be obtained from the distribution server 30. The distribution server 30 may be described more later.

In certain other embodiments, the transmission sub-stream may be selected corresponding to a randomly generated number. As shown in FIG. 2, the streaming media file A may include a transmission sub-stream 1, a transmission sub-stream 2, and a transmission sub-stream 3. The requesting node may generate a random number '2' through a random function or other method. Thus, the requesting node may select the transmission sub-stream 2.

Network based data transmission may encounter substantial concurrent traffic, especially when a large number of simultaneously active users go online and request the same data. That is, the number of requesting nodes is large, and each transmission sub-stream may be selected by a certain number of the users. In this case, using a randomly generated number to select the transmission sub-stream may be simple and fast as compared to other suitable methods, and the low latency requirement for the live streaming service may be better satisfied.

In one embodiment, the requesting node 10a and the other requesting nodes 10b, 10c, and 10d may request the same data, and may establish connections with each other through the network. The other requesting nodes 10b, 10c, and 10d may select the transmission sub-streams different from the requesting node l0a's selection.

As previously described, the peer-to-peer network based data transmission system 1 in the embodiments of the present disclosure may include a distribution server 30.

After selecting a transmission sub-stream, the requesting node 10a may send distribution request information to the distribution server 30. Based on the distribution request information, the distribution server 30 may select and respond information about other nearby requesting nodes 10b, 10c, and 10d. According to the response from the distribution server 30, the requesting node 10a may establish the data sharing relationship with the other requesting nodes 10b, 10c, and 10d, respectively.

Specifically, the distribution request information may include identification information of the requesting node 10a and the selected transmission sub-stream information.

The identification information may be used to identify the requesting node 10a such that other requesting nodes may determine the requesting node 10a through the identification information. The identification information may include attributes inherent to the requesting node 10a, e.g., the IP address and port number of the requesting node 10a. The identification information may be created in other method, e.g., an identity registered at a registration server dedicated for this purpose. No limitation is imposed by the present disclosure.

The transmission sub-stream information may include the requested data information and the transmission sub-stream sequence number.

The distribution server 30 may receive the distribution request information through the connection, extract the identification information, the requested data information, and the transmission sub-stream sequence number from the distribution request information, select other requesting nodes near the requesting node 10a through looking up local records, and return the other requesting node information to the requesting node 10a. The other requesting node information may include the identification information about each of the other requesting nodes. The local records 31 of the distribution server 30 may include the identification information about each requesting node, the requested data information, and the transmission sub-stream information. After extracting the information from the distribution request information of the requesting nodes 10, the distribution server 30 may store the extracted information in the local records.

The other requesting nodes 10b, 10c, and 10d may query the same streaming media file as the requesting node 10a, and may select the transmission sub-streams other than the transmission sub-stream of the requesting node 10a. For example, the data server 20 may set forth three transmission sub-streams *n1, n2,* and *n3* for the streaming media file requested by the requesting nodes 10. The requesting node 10a may select the transmission sub-stream *n1.* Then, when making selection, the other requesting nodes 10b, 10c, and 10d may select the transmission sub-streams *n2, n2,* and *n3*, respectively.

When selecting the other neighboring requesting nodes, the distribution server 30 may obtain the information about all the requesting nodes that share the same requested data and select different transmission sub-streams in the local records, and may select the requesting nodes that are physically close to the requesting node. Alternatively, the distribution server 10a may select the other requesting nodes that belong to the same service provider as the requesting node. In one embodiment, the distribution server 10a may select the neighboring requesting nodes according to the specific requirement by considering the physical location, the service provider, and the network status, etc. No limitation is imposed by the present disclosure.

The requesting node 10a may receive the other requesting node information returned by the distribution server 30, extract the identification information for the other requesting nodes 10b, 10c, and 10d, and establish the data sharing relationship with the other requesting nodes 10b, 10c, and 10d, respectively.

The data sharing relationship may include bidirectional sharing relationship and unidirectional sharing relationship.

In the bidirectional sharing relationship, both requesting nodes may push the self-downloaded data slices to the other party, and may receive the data slices pushed by the other party.

In the unidirectional sharing relationship, the requesting node that creates the data sharing relationship may have the data sharing relationship with the other requesting node similar to a subscription relationship. That is, the requesting node may subscribe to the other requesting nodes. Then, after the subscribed requesting nodes download data slices through the self-selected transmission sub-streams, the subscribed requesting nodes may proactively push the data slices to the subscribing requesting node. The subscribing requesting node may receive the data slices pushed by the subscribed requesting nodes. However, the subscribing requesting node may not be required to push any data slice to the subscribed requesting nodes.

In either the bidirectional sharing relationship or the unidirectional relationship, the requesting node that creates the data sharing relationship may terminate the data sharing relationship.

As previously described, the network data transmission may encounter substantial concurrent traffic. Numerous requesting nodes may request the same data. Then, the number of requesting nodes that select the same transmission sub-stream may naturally be large. Although screening conditions may be set forth to optimize the selection, the number of requesting nodes that select the same transmission sub-stream may not be 1. For example, the requesting nodes that select the same transmission sub-stream may include the requesting nodes 10b and 10c. Then, the requesting node 10a that proactively creates the data sharing relationship may need to select a requesting node, that is, make a requesting node selection based on the status of the data received by each other requesting node 10b or 10c that selects the same transmission sub-stream (e.g., transmission sub-stream *n2*).

Specifically, the requesting node may compare the timeliness and the integrity, etc. among the data slices pushed by the other requesting nodes that select the same transmission sub-stream, keep the data sharing relationship with certain other requesting nodes that provide good quality data slices, and terminate the data sharing relationship with certain other requesting nodes that provide poor quality data slices. Thus, the data sharing relationship may be evolved and updated. For example, when the requesting node 10a receives a data slice from the requesting node 10b, the requesting node 10a may discover that the same data slice has been received from the requesting node 10c. Then, the data transmission with the requesting node 10b may have poor timeliness, and the data sharing relationship with the requesting node 10b may be terminated by the requesting node 10a.

The requesting node 10a may download the corresponding data slices through the self-selected transmission sub-stream, and may use the data sharing relationship to obtain the data slices downloaded through other transmission sub-streams from the other requesting nodes 10b, 10c, and 10d such that a complete section of the streaming media file may be obtained and played.

In one embodiment, for illustrative purposes, the requesting node 10a may be used as an entry point. Other requesting nodes 10b, 10c, and 10d may perform data transmission through the same method as described.

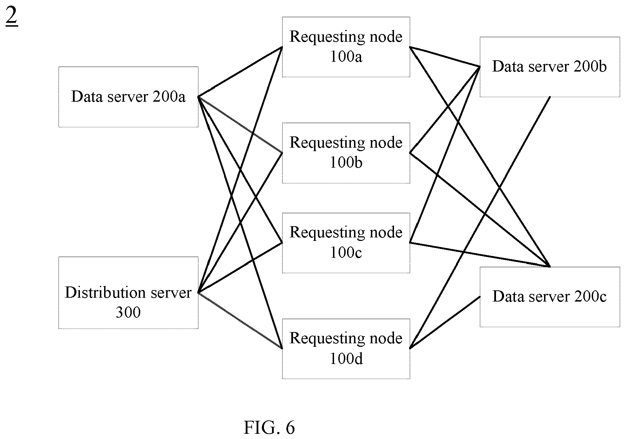

Further, in certain other embodiments, a plurality of data servers may be included. The requesting nodes in the network may access the plurality of the data servers. FIG. 6 illustrates a schematic diagram of another exemplary peer-to-peer network data transmission system architecture according to the present disclosure. As shown in FIG. 6, the data transmission system 2 may include data servers 200a, 200b, and 200c, requesting nodes 100a, 100b, 100c, and 100d that access the data servers and the distribution server 300. In the embodiments of the present disclosure, the functions of and the relationship between the data servers, the requesting nodes and the distribution server may be identical to the embodiments as shown in FIG. 5, and are not repeated.

The peer-to-peer network based data transmission system according to the present disclosure may have a simple architecture and a streamlined process. The data server may first slice the requested data into data slices, and may distribute each data slice separately to the corresponding transmission sub-stream such that the data slices may be split to different transmission sub-streams. In this way, the data transmitted through each transmission sub-stream may be a fraction of the requested data. The amount of data may be less than the requested data.

The requesting node may select a transmission sub-stream and download the corresponding data slices through the transmission sub-stream. Based on the data sharing relationship with other requesting nodes, the requesting node may obtain the corresponding data slices downloaded through other transmission sub-streams from the other requesting nodes such that the requested data may be obtained. The data transmission system may not only reduce the workload at the data source from which the requesting nodes download the data slices, but also fully utilize the data sharing with the other requesting nodes. Thus, the timeliness of the data transmission may be improved, the latency may be reduced, and the live streaming service requirement may be better satisfied.

Further, based on the timeliness and the integrity of the received data slices, the requesting node may decide whether to keep or terminate certain data sharing relationship the requesting node creates. Thus, the data sharing relationship may be evolved and updated.

The system embodiments described above are merely for illustrative purpose. The units described as separated parts may or may not be physically detached. The parts displayed as units may or may not be physical units, i.e., may be located at one place, or distributed at a plurality of network units. Based on the actual needs, a part or all of the modules may be selected to achieve the objective of the embodiments. Those ordinarily skilled in the art may understand and implement the disclosed embodiments without contributing creative labor.

Through the descriptions of various aforementioned embodiments, those skilled in the art may clearly understand that the embodiments may be implemented by means of software in conjunction with an essential common hardware platform, or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, etc., and may include a plurality of instructions to enable a computer device (may be a personal computer, a server, or a network device) to execute the methods described in various embodiments or parts of the embodiments.

The foregoing are merely certain preferred embodiments of the present disclosure, and are not intended to limit the present disclosure.

## Claims

1. A peer-to-peer network based data transmission method, comprising:
slicing (S10) requested data into data slices, and establishing at least two transmission sub-streams, wherein the data slices are transmitted through corresponding transmission sub-streams;
selecting (S20), by a requesting node (10a; 100a), a transmission sub-stream of a plurality of transmission sub-streams and respectively establishing data sharing relationship with other requesting nodes (10b, 10c, 10d; 100b, 100c, 100d), wherein the other requesting nodes select transmission sub-streams different from the transmission sub-stream selected by the requesting node; and
downloading (S30), by the requesting node, corresponding data slices from a data source through the transmission sub-stream and, based on the data sharing relationship, receiving data slices downloaded from the data source through the transmission sub-streams self-selected by the other requesting nodes,
wherein selecting, by the requesting node, a transmission sub-stream includes selecting a transmission sub-stream based on a selection status of each transmission sub-stream; wherein the selection status is representative of a minimum number of established selections of the transmission sub-stream by a number of requesting nodes such that each transmission sub-stream is selected by a balanced number of requesting nodes.

2. The peer-to-peer network based data transmission method according to claim 1, wherein:
slicing the requested data into data slices includes slicing the requested data into data slices according to pre-determined processing rules.

3. The peer-to-peer network based data transmission method according to claim 1, wherein:
transmitting data slices through the corresponding transmission sub-stream includes sequentially distributing data slices to each transmission sub-stream in an order in which the data slices are generated.

4. The peer-to-peer network based data transmission method according to claim 1, wherein establishing data sharing relationship with other requesting nodes includes:
Sending (S201), by the requesting node, distribution request information to a distribution server (300), wherein the distribution request information includes the identification information of the requesting node and the information of the selected transmission sub-stream;
selecting (S202) and responding, by the distribution server (300), information about other nearby requesting nodes (10b, 10c, 10d; 100b, 100c, 100d) based on the distribution request information; and
establishing (S203), by the requesting node (10a; 100a), the data sharing relationship with other requesting nodes according to the response from the distribution server, respectively.

5. The peer-to-peer network based data transmission method according to claim 1, wherein:
the requesting node and the other requesting nodes in the data sharing relationship push the self-downloaded data slices to each other, and respectively receive the data slices pushed by the other party.

6. The peer-to-peer network based data transmission method according to claim 1, wherein:
the other requesting nodes in the data sharing relationship push the self-downloaded data slices to the requesting node, and the requesting node receives the data slices pushed by the other requesting nodes.

7. A peer-to-peer network based data transmission system, comprising:
a plurality of requesting nodes (10a, 10b, 10c, 10d; 100a,
100b, 100c, 100d); and
a data server (20; 200a, 220b, 200c) connecting to each
requesting node (10a, 10b, 10c, 10d; 100a, 100b, 100c, 100d), wherein:
the data server slices (S10) requested data into data slices, and establishes at least two transmission sub-streams, wherein the data slices are transmitted through corresponding transmission sub-streams;
the requesting node selects (S20) a transmission sub-stream of a plurality of transmission sub-streams based on a selection status of each transmission sub-stream, wherein the selection status is representative of a minimum number of established selections of the transmission sub-stream by a number of requesting nodes such that each transmission sub-stream is selected by a balanced number of requesting nodes;
and respectively establishes data sharing relationship with other requesting nodes, wherein the other requesting nodes select transmission sub-streams different from the transmission sub-stream selected by the requesting node; and
the requesting node downloads (S30) corresponding data slices from a data source through the transmission sub-stream, and based on the data sharing relationship, receives (S30) data slices downloaded from the data source through the transmission sub-streams self-selected by the other requesting nodes.

8. The peer-to-peer network based data transmission system according to claim 7, wherein:
slicing, by the data server, the requested data into data slices includes slicing the requested data into data slices according to pre-determined processing rules.

9. The peer-to-peer network based data transmission system according to claim 7, wherein:
the data server creates a sequence number for each of the data slices, and distributes each of the data slices to each transmission sub-stream based on the sequence number of each of the data slices.

10. The peer-to-peer network based data transmission system according to claim 7, further including a distribution server (300), wherein the requesting node's (10a; 100a) establishing data sharing relationship with other requesting nodes (10b, 10c, 10d; 100b, 100c, 100d) includes:
sending, by the requesting node, distribution request information to the distribution server (300), wherein the distribution request information includes the identification information of the requesting node and the information of the selected transmission sub-stream;
selecting and responding, by the distribution server (300), information about other nearby requesting nodes based on the distribution request information; and
establishing, by the requesting node, the data sharing relationship with other requesting nodes according to the response from the distribution server (300), respectively.

11. The peer-to-peer network based data transmission system according to claim 7, wherein:
the requesting node and the other requesting nodes in the data sharing relationship push the self-downloaded data slices to each other, and respectively receives the data slices pushed by the other party.

12. The peer-to-peer network based data transmission system according to claim 7, wherein:
the other requesting node in the data sharing relationship pushes the self-downloaded data slices to the requesting node, and the requesting node receives the data slices pushed by the other requesting node.

13. The peer-to-peer network based data transmission system according to claim 7, wherein:
the requesting node keeps or terminates the data sharing relationship with the other requesting nodes.

## Patentansprüche

1. Peer-to-Peer-Netzwerk-basiertes Datenübertragungsverfahren, das Folgendes umfasst:
Aufteilen (S10) angeforderter Daten in Datenscheiben, und Einrichten von wenigstens zwei Übertragungsunterströmen, wobei die Datenscheiben über entsprechende Übertragungsunterströme übertragen werden;
Auswählen (S20), durch einen anfordernden Knoten (10a; 100a), eines Übertragungsunterstroms aus mehreren Übertragungsunterströmen und jeweiliges Einrichten einer Datenaustauschbeziehung mit anderen anfordernden Knoten (10b, 10c, 10d; 100b, 100c, 100d), wobei die anderen anfordernden Knoten Übertragungsunterströme auswählen, die sich von dem durch den anfordernden Knoten ausgewählten Übertragungsunterstrom unterscheiden; und
Herunterladen (S30), durch den anfordernden Knoten, entsprechender Datenscheiben von einer Datenquelle über den Übertragungsunterstrom und, basierend auf der Datenaustauschbeziehung, Empfangen von Datenscheiben, die von der Datenquelle über die durch die anderen anfordernden Knoten selbst ausgewählten Übertragungsunterströme heruntergeladen werden,
wobei das Auswählen, durch den anfordernden Knoten, eines Übertragungsunterstroms das Auswählen eines Übertragungsunterstroms basierend auf einem Auswahlstatus jedes Übertragungsunterstroms einschließt; wobei der Auswahlstatus eine Mindestanzahl eingerichteter Auswahlen des Übertragungsunterstroms durch eine Anzahl anfordernder Knoten derart darstellt, dass jeder Übertragungsunterstrom durch eine ausgeglichene Anzahl anfordernder Knoten ausgewählt wird.

2. Peer-to-Peer-Netzwerk-basiertes Datenübertragungsverfahren nach Anspruch 1, wobei:
das Aufteilen der angeforderten Daten in Datenscheiben das Aufteilen der angeforderten Daten in Datenscheiben gemäß vorbestimmter Verarbeitungsregeln einschließt.

3. Peer-to-Peer-Netzwerk-basiertes Datenübertragungsverfahren nach Anspruch 1, wobei:
das Übertragen von Datenscheiben über den entsprechenden Übertragungsunterstrom das fortlaufende Verteilen von Datenscheiben an jeden Übertragungsunterstrom in einer Reihenfolge, in der die Datenscheiben erzeugt werden, einschließt.

4. Peer-to-Peer-Netzwerk-basiertes Datenübertragungsverfahren nach Anspruch 1, wobei das Einrichten von Datenaustauschbeziehungen mit anderen anfordernden Knoten Folgendes einschließt:
Senden (S201), durch den anfordernden Knoten, von Verteilungsanforderungsinformationen an einen Verteilungsserver (300), wobei die Verteilungsanforderungsinformationen die Identifikationsinformationen des anfordernden Knotens und die Informationen des ausgewählten Übertragungsunterstroms einschließen;
Auswählen (S202) und Beantworten, durch den Verteilungsserver (300), von Informationen über andere nahegelegene anfordernde Knoten (10b, 10c, 10d; 100b, 100c, 100d), basierend auf den Verteilungsanforderungsinformationen; und
Einrichten (S203), durch den anfordernden Knoten (10a; 100a), der Datenaustauschbeziehung mit anderen anfordernden Knoten gemäß der jeweiligen Antwort von dem Verteilungsserver.

5. Peer-to-Peer-Netzwerk-basiertes Datenübertragungsverfahren nach Anspruch 1, wobei:
der anfordernde Knoten und die anderen anfordernden Knoten in der Datenaustauschbeziehung die selbst heruntergeladenen Datenscheiben zueinander schieben und jeweils die durch die andere Partei geschobenen Datenscheiben empfangen.

6. Peer-to-Peer-Netzwerk-basiertes Datenübertragungsverfahren nach Anspruch 1, wobei:
die anderen anfordernden Knoten in der Datenaustauschbeziehung die selbst heruntergeladenen Datenscheiben zu dem anfordernden Knoten schieben, und der anfordernde Knoten die durch die anderen anfordernden Knoten geschobenen Datenscheiben empfängt.

7. Peer-to-Peer-Netzwerk-basiertes Datenübertragungsverfahren, das Folgendes umfasst:
mehrere anfordernde Knoten (10a, 10b, 10c, 10d; 100a, 100b, 100c, 100d); und
einen Datenserver (20; 200a, 220b, 200c), der mit jedem anfordernden Knoten (10a, 10b, 10c, 10d; 100a, 100b, 100c, 100d) verbunden ist, wobei:
der Datenserver angeforderte Daten in Datenscheiben aufteilt (S10) und wenigstens zwei Übertragungsunterströme einrichtet, wobei die Datenscheiben über entsprechende Übertragungsunterströme übertragen werden;
der anfordernde Knoten einen Übertragungsunterstrom aus mehreren Übertragungsunterströmen auswählt (S20), basierend auf einem Auswahlstatus jedes Übertragungsunterstroms, wobei der Auswahlstatus eine Mindestanzahl eingerichteter Auswahlen des Übertragungsunterstroms durch eine Anzahl von anfordernden Knoten derart darstellt, dass jeder Übertragungsunterstrom durch eine ausgeglichene Anzahl anfordernder Knoten ausgewählt wird; und
jeweils die Datenaustauschbeziehung mit anderen anfordernden Knoten einrichtet, wobei die anderen anfordernden Knoten Übertragungsunterströme auswählen, die sich von dem durch den anfordernden Knoten ausgewählten Übertragungsunterstrom unterscheiden; und
der anfordernde Knoten entsprechende Datenscheiben von einer Datenquelle über den Übertragungsunterstrom herunterlädt (S30), und basierend auf der Datenaustauschbeziehung, Datenscheiben, die von der Datenquelle über die durch die anderen anfordernden Knoten selbst ausgewählten Übertragungsunterströme heruntergeladen wurden, empfängt (S30).

8. Peer-to-Peer-Netzwerk-basiertes Datenübertragungsverfahren nach Anspruch 7, wobei:
das Aufteilen, durch den Datenserver, der angeforderten Daten in Datenscheiben das Aufteilen der angeforderten Daten in Datenscheiben gemäß vorbestimmter Verarbeitungsregeln einschließt.

9. Peer-to-Peer-Netzwerk-basiertes Datenübertragungsverfahren nach Anspruch 7, wobei:
der Datenserver eine Sequenznummer für jede der Datenscheiben erstellt und jede der Datenscheiben basierend auf der Sequenznummer jeder der Datenscheiben an jeden Übertragungsunterstrom verteilt.

10. Peer-to-Peer-Netzwerk-basiertes Datenübertragungsverfahren nach Anspruch 7, das ferner einen Verteilungsserver (300) einschließt, wobei das Einrichten der Datenaustauschbeziehung des anfordernden Knotens (10a; 100a) mit anderen anfordernden Knoten (10b, 10c, 10d; 100b, 100c, 100d) Folgendes einschließt:
Senden, durch den anfordernden Knoten, von Verteilungsanforderungsinformationen an den Verteilungsserver (300), wobei die Verteilungsanforderungsinformationen die Identifikationsinformationen des anfordernden Knotens und die Informationen des ausgewählten Übertragungsunterstroms einschließen;
Auswählen und Beantworten, durch den Verteilungsserver (300), von Informationen über andere nahegelegene anfordernde Knoten, basierend auf den Verteilungsanforderungsinformationen; und
Einrichten, durch den anfordernden Knoten, der Datenaustauschbeziehung mit anderen anfordernden Knoten gemäß der jeweiligen Antwort von dem Verteilungsserver (300).

11. Peer-to-Peer-Netzwerk-basiertes Datenübertragungsverfahren nach Anspruch 7, wobei:
der anfordernde Knoten und die anderen anfordernden Knoten in der Datenaustauschbeziehung die selbst heruntergeladenen Datenscheiben zueinander schieben und jeweils die durch die andere Partei geschobenen Datenscheiben empfangen.

12. Peer-to-Peer-Netzwerk-basiertes Datenübertragungsverfahren nach Anspruch 7, wobei:
der andere anfordernde Knoten in der Datenaustauschbeziehung die selbst heruntergeladenen Datenscheiben zu dem anfordernden Knoten schieben, und der anfordernde Knoten die durch die anderen anfordernden Knoten geschobenen Datenscheiben empfängt.

13. Peer-to-Peer-Netzwerk-basiertes Datenübertragungsverfahren nach Anspruch 7, wobei:
der anfordernde Knoten die Datenaustauschbeziehung mit den anderen anfordernden Knoten behält oder beendet.

## Revendications

1. Procédé de transmission de données en réseau entre homologues, comprenant :
le tranchage (S10) de données demandées en tranches de données, et l'établissement d'au moins deux sous-flux de transmission, les tranches de données étant transmises par le biais de sous-flux de transmission correspondants ;
la sélection (S20), par un nœud demandeur (10a ; 100a), d'un sous-flux de transmission d'une pluralité de sous-flux de transmission et l'établissement respectif d'une relation de partage de données avec d'autres nœuds demandeurs (10b, 10c, 10d ; 100b, 100c, 100d), les autres nœuds demandeurs sélectionnant des sous-flux de transmission différents du sous-flux de transmission sélectionné par le nœud demandeur ; et
le téléchargement vers l'aval (S30), par le nœud demandeur, de tranches de données en provenance d'une source de données par le biais du sous-flux de transmission et, en fonction de la relation de partage de données, la réception de tranches de données téléchargées vers l'aval en provenance de la source de données par le biais des sous-flux de transmission autosélectionnés par les autres nœuds demandeurs, la sélection, par le nœud demandeur, d'un sous-flux de transmission comportant la sélection d'un sous-flux de transmission en fonction d'un état de sélection de chaque sous-flux de transmission ;
l'état de sélection étant représentatif d'un nombre minimum de sélections établies du sous-flux de transmission par un nombre de nœuds demandeurs tel que chaque sous-flux de transmission est sélectionné par un nombre équilibré de nœuds demandeurs.

2. Procédé de transmission de données en réseau entre homologues selon la revendication 1, dans lequel :
le tranchage des données demandées en tranches de données comporte le tranchage des données demandées en tranches de données selon des règles de traitement prédéterminées.

3. Procédé de transmission de données en réseau entre homologues selon la revendication 1, dans lequel :
la transmission de tranches de données par le biais du sous-flux de transmission correspondant comporte la distribution séquentielle de tranches de données à chaque sous-flux de transmission suivant un ordre dans lequel les tranches de données sont générées.

4. Procédé de transmission de données en réseau entre homologues selon la revendication 1, dans lequel l'établissement d'une relation de partage de données avec d'autres nœuds demandeurs comporte :
l'envoi (S201), par le nœud demandeur, d'informations de demande de distribution à un serveur de distribution (300), les informations de demande de distribution comportant les informations d'identification du nœud demandeur et les informations du sous-flux de transmission sélectionné ;
la sélection (S202) et la fourniture en réponse, par le serveur de distribution (300), d'informations concernant d'autres nœuds demandeurs avoisinants (10b, 10c, 10d; 100b, 100c, 100d) en fonction des informations de demande de distribution ; et
l'établissement (S203), par le nœud demandeur (10a ; 100a), de la relation de partage de données avec d'autres nœuds demandeurs conformément à la réponse du serveur de distribution, respectivement.

5. Procédé de transmission de données en réseau entre homologues selon la revendication 1, dans lequel :
le nœud demandeur et les autres nœuds demandeurs dans la relation de partage de données poussent les tranches de données auto-téléchargées vers l'aval les unes vers les autres et reçoivent respectivement les tranches de données poussées par l'autre partie.

6. Procédé de transmission de données en réseau entre homologues selon la revendication 1, dans lequel :
les autres nœuds demandeurs dans la relation de partage de données poussent les tranches de données auto-téléchargées vers l'aval vers le nœud demandeur, et le nœud demandeur reçoit les tranches de données poussées par les autres nœuds demandeurs.

7. Système de transmission de données en réseau entre homologues, comprenant :
une pluralité de nœuds demandeurs (10a, 10b, 10c, 10d ; 100a, 100b, 100c, 100d) ; et
un serveur de données (20; 200a, 220b, 200c) se connectant à chaque nœud demandeur (10a, 10b, 10c, 10d ; 100a, 100b, 100c, 100d), dans lequel :
le serveur de données tranche (S10) des données demandées en tranches de données, et établit au moins deux sous-flux de transmission, les tranches de données étant transmises par le biais de sous-flux de transmission correspondants ;
le nœud demandeur sélectionne (S20) un sous-flux de transmission parmi une pluralité de sous-flux de transmission en fonction d'un état de sélection de chaque sous-flux de transmission, l'état de sélection étant représentatif d'un nombre minimum de sélections établies du sous-flux de transmission par un nombre de nœuds demandeurs tel que chaque sous-flux de transmission est sélectionné par un nombre équilibré de nœuds demandeurs ;
et établit respectivement une relation de partage de données avec d'autres nœuds demandeurs, les autres nœuds demandeurs sélectionnant des sous-flux de transmission différents du sous-flux de transmission sélectionné par le nœud demandeur ; et
le nœud demandeur télécharge vers l'aval (S30) des tranches de données correspondantes en provenance d'une source de données par le biais le sous-flux de transmission et, en fonction de la relation de partage de données, reçoit (S30) des tranches de données téléchargées vers l'aval en provenance de la source de données par le biais des sous-flux de transmission autosélectionnés par les autres nœuds demandeurs.

8. Système de transmission de données en réseau entre homologues selon la revendication 7, dans lequel :
le tranchage, par le serveur de données, des données demandées en tranches de données comporte le tranchage des données demandées en tranches de données selon des règles de traitement prédéterminées.

9. Système de transmission de données en réseau entre homologues selon la revendication 7, dans lequel :
le serveur de données crée un numéro de séquence pour chacune des tranches de données et distribue chacune des tranches de données à chaque sous-flux de transmission en fonction du numéro de séquence de chacune des tranches de données.

10. Système de transmission de données en réseau entre homologues selon la revendication 7, comportant en outre un serveur de distribution (300), l'établissement par le nœud demandeur (10a ; 100a) d'une relation de partage de données avec d'autres nœuds demandeurs (10b, 10c, 10d ; 100b, 100c, 100d) comportant :
l'envoi, par le nœud demandeur, d'informations de demande de distribution au serveur de distribution (300), les informations de demande de distribution comportant les informations d'identification du nœud demandeur et les informations du sous-flux de transmission sélectionné
la sélection et la fourniture en réponse, par le serveur de distribution (300), d'informations concernant d'autres nœuds demandeurs avoisinants en fonction des informations de demande de distribution ; et
l'établissement, par le nœud demandeur, de la relation de partage de données avec d'autres nœuds demandeurs conformément à la réponse du serveur de distribution (300), respectivement.

11. Système de transmission de données en réseau entre homologues selon la revendication 7, dans lequel :
le nœud demandeur et les autres nœuds demandeurs dans la relation de partage de données poussent les tranches de données auto-téléchargées vers l'aval les unes vers les autres et reçoivent respectivement les tranches de données poussées par l'autre partie.

12. Système de transmission de données en réseau entre homologues selon la revendication 7, dans lequel :
l'autre nœud demandeur dans la relation de partage de données pousse les tranches de données auto-téléchargées vers l'aval vers le nœud demandeur, et le nœud demandeur reçoit les tranches de données poussées par l'autre nœud demandeur.

13. Système de transmission de données en réseau entre homologues selon la revendication 7, dans lequel :
le nœud demandeur conserve ou met fin à la relation de partage de données avec les autres nœuds demandeurs.
